# EUROPEAN PATENT APPLICATION

(11) **EP 1 188 481 A2**
(43) Date of publication of application: **20.03.2002**
(21) Application number: 01000425.7
(22) Date of filing: 05.09.2001
(51) Int. Cl.: B01L 3/00

(54) **A Microtiter plate having wells for combinatorial applications**

(30) Priority: 15.09.2000 EP 00203182
(71) Applicant: Agfa-Gevaert, 2640 Mortsel (BE)
(72) Inventor: Desie, Guido, c/o Agfa-Gevaert C.I.P.D. 3800, 2640, Mortsel (BE); Vanmaele, Luc, c/o Agfa-Gevaert C.I.P.D. 3800, 2640, Mortsel (BE)

(57) **Abstract**

A microtiter plate for combinatorial experimentation is disclosed comprising a substrate and multiple microwells, arranged on said substrate in a predetermined pattern and separated from each other by separating zones, each microwell comprising a bottom and an upstanding surface formed by the adjacent separating zones and extending at most 500 µm above the bottom, wherein the composition of said bottoms on the one hand and the composition of said separating zones and upstanding surfaces on the other hand show a different hydrophilicity, and wherein said bottoms have undergone a surface treatment to improve the dynamics of fluid spreading.

## Description

### FIELD OF THE INVENTION

The present invention relates to improved media for use in high throughput screening and combinatorial experimentation, and to methods for manufacturing said media.

### BACKGROUND OF THE INVENTION

Through the years, chemical and pharmaceutical industry have increasingly relied on High Throughput Screening (HTS) of libraries of chemical compounds, biologically active compounds and cells to identify novel materials or compounds with useful properties. HTS describes a method where many discrete compounds are tested in parallel so that large numbers of test compounds are screened for the useful properties. In recent years combinatorial chemistry methodologies have been increasingly applied to the field of materials science, including homogeneous and heterogeneous catalysis, phosphors for luminescent materials, etc. A review has been presented by Jandeleit et al., Angew. Chem. Int. Ed., 1999, 38, 2494-2532. Many references to material design by combinatorial techniques can be found in this review. Combinatorial search for advanced luminescence materials has also been described in Biotech. & Bioeng., (Combinatorial Chemistry), vol. 61, no. 4, pp. 193-201. Combinatorial techniques for developing new materials have also been extensively used in the patent literature: e.g. US-P-5,985,356, US-P-6,004,617, US-P-6,030,917, US-P-6,043,363, US-P-6,045,671 and US-P-6,034,775.

Currently, the most widely established techniques utilise 96-well microtiter plates as a substrate for performing the reactions and/or the testing. In this format, 96 independent tests are performed simultaneously on a single 8 cm x 12 cm plastic plate that contains 96 reaction wells. These wells typically require assay volumes that range from e.g. 2 to 500 µl. Also microtiter plates with wells up to 10 or more ml are commercially available.

A problem that arises with such microtiter plates lays in the fact that the construction is truly three dimensional and that the plates occupy, upon storing, quite a large volume.

A typical example of such a truly three-dimensional microtiter plate is described in US-P-4,735,778. Typically a white powder is used as raw material and the layout is made by an injection molding process. In order to improve the wettability inside the wells made in this moulding process a hydrophilic aftertreatment can be used as described in US-P-5,041,266. The hydrophobic plastic materials such as polystyrene can be oxidized to make them more hydrophilic, this process can even been done using corona charging devices.

More complex plates have been developed, e.g. having 384 or 1536 wells, increasing the amount of tests that can be done per single plate and reducing the amount of materials that have to be used within a single microwell (e.g. the NUNC 1536 Well Plates have a working volume of 10 µl, and are commercially available from NUNC Brand Products, USA). However, the thickness of these plates remains rather high (7.4 mm for said NUNC well plates), resulting in only a small gain in storing capacity. Other developments have been documented in the literature. D. Dunn has described in the drug discovery and development magazine of april 2001 on pages 47-50 (available via web site www.dddmag.com) an article about miniturisized ultra-HTS, where volume ranges down to 2 µl have been described. In all these examples a moulding process with rather thick plates is used.

In WO 98/03257 a solid support for analytical measuring processes is described making use of glass plates as substrates. The structuring processes of glass plates have also been clearly described by Matsuda and Chung (Microfabricated surface designs for cell culture and diagnosis, ASAIO Journal 1994, pages M594-M597). Here surface treatment of glasses is combined with ablation processes such as excimer laser treatment to end up with "wells" having small sizes, but present upon thick glass substrates. A method for conducting chemical reactions between a solution of a chemical reactant and an array of functionalized binding sites on a glass plate has also been described in WO 94/27719. WO 95/35505 describes a microscope glass plate treated with poly-L-lysine on which components are set in contact by a step-and-repeat dispenser tip. In this way glass-slide polynucleotide arrays of small scale can be fabricated.

WO 98/45406 describes a method and devices for partitioning biological sample liquids into microvolumes. The method involves distributing microvolumes of a sample to a plurality of hydrophilic liquid-retaining zones of a culture device, wherein each liquid-retaining zone is surrounded by a portion of a hydrophobic "land" area. Typically hydrophobic organic plastic materials (e.g. stacked polyethylene sheets) are embossed on a heated hydraulic press (132 C, 1.4 N/m², 120 second dwell), resulting in a deformed plate having some three-dimensional structure. Since the embossed wells into these materials are shielded from the contact nip using contact transferring technology, the "land" area surrounding the wells can be made more hydrophobic by e.g. transferring a thin layer of acrylated silicone and a crosslinker to said three-dimensional structure, followed by curing. At the end a three-dimensional structure is obtained having wells that are more hydrophilic than the surrounding "land" zones. Since embossing technology is used here to create well structures, some depth variation is present into these wells. As a consequence it is never possible to have a thin uniform spreading of a liquid material into these wells. The amount of the components will always be larger in the centre of the well compared to the edges.

More complicated test setups to yield multiple-site test and/or coatings have also been described in the literature. In US-A-5,210,021 a multiple-site chemotactic test apparatus and method is described, wherein surface tension is used to hold cell suspensions. A membrane and a separate (e.g. steel) mask grid is combined so that chemotactic factors can be applied through said mask to said membrane at many different locations, and on the back side of said membrane drops of cell suspensions can be added, followed by determination of the responses after a certain incubating time. In US-P-5,698,162 a glass based slide is described comprising a liquid impervious top surface and an absorbent material used to capture the amount of liquid that is too high to be captured into a single reaction well so that mixing of neighbouring wells can be avoided.

It is clear that many descriptions can be found in the literature for methods using multi-site testing, but all of these methods are based upon rather thick plates. The test solutions are mostly gathered in three-dimensional wells and are not spread egally over the whole well surface. These methods are useful for analytical detection of some activities, but are not suitable for e.g. quantitative optical characterisations. For these purposes there remains a great need to have very thin materials having microtiter properties in which the homogeneity of the materials deposited into the wells is very good.

So, the need for improved media useful in quasi quantitative combinatorial experimentation still exists.

### OBJECTS OF THE INVENTION

It is an object of the invention to provide a medium for combinatorial experimentation that is substantially flat and thin and that has distinct homogeneous regions that can accommodate fluids and / or solids.

It is a further object of the invention to provide a medium for combinatorial experimentation that contains microwells that can hold an initial volume of fluid that is higher than the actual volume of the microwells, and that leads to a homogeneous distribution of components over the full area of the well after drying / curing / aging.

Further objects of the invention will become clear from the detailed description hereinafter.

### SUMMARY OF THE INVENTION

The objects of the invention are realised by providing a microtiter plate for combinatorial experimentation comprising a substrate and multiple microwells, arranged on said substrate in a predetermined pattern and separated from each other by separating zones, each microwell comprising a bottom and an upstanding surface formed by the adjacent separating zones and extending at most 500 µm above the bottom, wherein the composition of said bottoms on the one hand and the composition of said separating zones and upstanding surfaces on the other hand show a different hydrophilicity, and wherein said bottoms have undergone a surface treatment to improve the dynamics of fluid spreading.

### DETAILED DESCRIPTION OF THE INVENTION

It was found that it is possible to create on a substrate microwells by introducing according to a predetermined pattern differences in hydrophilicity on multiple regions of said substrate. More particularly a difference in hydrophilicity is created, as will be explained furtheron, between the bottom of each microwell on the one hand and the separating zones and upstanding surface formed by the adjacent separating zones on the other hand. This upstanding surface can also be described as the "wall" of each microwell. According to the invention this "wall" extends at most 500 µm above the bottom. This difference in hydrophilicity can be measured by determining the difference in contact angle with a droplet of water between the bottoms on the one hand, and the separating zones and walls on the other hand. It showed that for the purpose of this invention a difference of at least 5° in contact angle when measured with water is appropriate. Preferably said difference in contact angle is of at least 10°. Most preferably the difference in contact angle is at least 25°.

In a first embodiment of this invention, microtiter plates are produced so as to have microwells with a hydrophilic bottom separated by a hydrophobic separating zone and upstanding surface. So in such a microtiter plate the contact angle of water with the bottom of the wells is smaller than the contact angle of water with the separating zone and upstanding surface. Microtiter plates according to this embodiment of the invention are thus very well suited for receiving reagents, solutions, biological fluids, cells, etc. in an aqueous medium in their microwells. Aqueous medium means water, mixtures of water and water miscible solvents such as C1 to C4 alcohols (methanol, ethanol, n-propanol, isopropanol, butanol and mixtures thereof), ketones (acetone, 2-butanone), esters, amides; in fact it means any solvent mixture containing at least 10 % of water.

In a second embodiment of this invention, microtiter plates are produced so as to have microwells with a hydrophobic bottom separated from each other by hydrophilic separating zones and upstanding surfaces. Thus in such a microtiter plate the contact angle of water with the bottom of the wells is larger than the contact angle of water with the separating zone and upstanding surface. Microtiter plates according to this embodiment of the invention are thus very well suited for receiving reagents in a an organic non-water miscible solvent.

It was found that in these materials having wells for combinatorial applications with differences in hydrophilicity the actual volume of liquid that could be introduced into a single well was much larger than the theoretical volume. It was even found that a volume of liquid up to 50 times the theoretical volume of the well could be accommodated in the well and that, even when the wells were filled up to 50 times their actual volume, the liquid contained in the wells could be kept into the individual well positions without mixing or spoiling, even after placing the microtiter plate on a vibration table. Thus the microtiter plates according to this invention can be made thinner than conventional microtiter plates because the microwells can hold a volume that is larger than the physical volume of the microwell. It was also observed that, when a microwell was filled with a solution of a dyestuff in a solvent up to 30 times the actual volume, then the solvent could be evaporated while the dyestuff remained homogenously distributed within the boundaries of the microwell.

The fact that the microwells in microtiter plates of this invention can hold a higher volume of liquid than the actual volume of the microwell makes the microtiter plates of this invention very well suited for reactions between a liquid (a pure liquid or a solution) and a gas, because the liquid extends for a large portion above the surface of the microtiter plate, the extending portion presents thus a large reaction surface for the gas that can easily wash around that extending portion.

In microtiter plates according to the invention the walls of the microwells are at most 500 µm high, preferably at most 250 µm. Depending on the use, the microtiter plates of this invention can have microwells with walls as low as 0.1 µm.

In microtiter plates according to the invention the bottoms of the microwells are treated to improve the dynamics of spreading. A surface treatment of the bottom layer can be done to obtain this required effect, or an additional coating can be applied on top of the base material. In both cases the layer thickness of the top surface of the bottom of the microwells is at least 1 µm thick, more preferably at least 5 µm, and most preferably, especially in the case of absorptive coatings, at least 10 µm thick. The spreading can be further improved by increasing the surface roughness of the bottom of the microwells. Expressed in terms of Rₐ the roughness value is at least 0.25 µm, preferably at least 0.50 µm and even more preferably at least 0.85 µm. Physicochemical techniques such as plasma etching are very well suitable to obtain better spreading characteristics. It is often observed that both the hydrophobic characteristics of the separating zones and the hydrophilic characteristics of the bottom of the wells are improved after plasma treatment: i.e. both the hydrophilicity of the bottom and the hydrophobicity of the separating zones are improved. Instead of an overall plasma treatment, it is also possible to use a mask in register with the microwells so that only the hydrophilic bottoms, or the hydrophobic separating zones, are treated. In the case of metal plates such as aluminium electrochemical treatments can be used to improve the spreading characteristics. Part of the aluminium can be oxidized to obtain a thicker and more hydrophilic aluminium oxide layer, resulting in improved spreading characteristics. Also for organic polymeric materials, chemical deformation of the bottoms is possible to increase the spreading characteristics: corona treatment, selective oxidation, and specific chemical reactions can be used to alter the spreading characteristics of the bottoms of the wells. As stated above, it is also possible to apply a separate extra coating composition to the bottom of the wells, resulting in an additional layer with a thickness of at least 1 µm forming the surface of the bottom of the well. Here, coating compositons comprising binders, pigments, and spreading improvement ingredients such as surfactants, oligomers, etc. can be used. For the purpose of easy and cheap fabrication processes this coating composition can be applied to the full area of the substrate prior to applying the hydrophobic composition necessary to form the separating zones and walls of the wells. After exposure and development, a microtiter plate for combinatorial applications is obtained having an absorptive coating on top of the substrate, said coating forming the bottom of the well, and being present under the hydrophobic top layer forming the separating zones.

Microtiter plates of this invention can have microwells having any shape, the microwells can be circular, elliptical, oval, square, rectangular, etc. The microwell pattern can also have any geometrical form, but preferably it is a rectangular grid.

Microtiter plates according to this invention can be made so as to have larger microwells, e.g. with diameter at the bottom of 1 cm and an height of 100 µm, of which the bottom is further divided by walls - having a hydrophilicity different from the hydrophilicity of the bottom - in at least two "baby microwells". The walls dividing the bottom of the larger microwell have a height at least 50 % lower than the height of the larger microwell. Preferably the height of the walls in the "baby microwells" is at least 75 % lower than the height of the larger microwell. The difference in hydrophilicity between the bottom of the larger microwell and the walls dividing the bottom can be chosen smaller than the difference in hydrophilicity between the bottom of the larger microwell and the surface separating the larger microwells. When screening chemical reactions in, e.g., a microtiter plate having 96 larger microwells, the reactants are mixed in the microwells and there is a risk that the reaction starts in microwell 1 at an earlier time than in microwell 96 due to the time needed to fill the different microwells. With a microtiter plate having larger microwells divided in at least two "baby microwells", separated by fairly low walls, the reactants can be brought separately in separate "baby microwells" in each of the 96 larger microwells, and only when all reactants are in place the mixing of the reactants in the 96 larger microwells can proceed simultaneously. This means that the height of the walls and the difference in hydrophilicity of the bottom of the larger microwell and the walls dividing that bottom are chosen so that upon vibration the liquids contained in the "baby microwells" spill over the walls of the "baby microwells" but not over the walls of the larger microwells.

The substrate of the microtiter plates of this invention can be made thin. It can have a thickness between 50 and 1000 µm, preferably between 50 and 500 µm.

The microwells of the microtiter plates of this invention can be coupled to means for heating the content of the microwells, e.g., thermal heating or optical heating and/or to means for stirring the contents of the microwell, e.g., ultrasonic vibrations, piezo-vibrations, etc..

The scope of the present invention also encompasses methods for manufacturing microtiter plates as described.

We will now explain in detail the first embodiment of the methods of the invention : manufacturing of microtiter plates having microwells with a hydrophilic bottom separated by a hydrophobic separating zone and upstanding surface.

Microtiter plates having microwells with a hydrophilic bottom separated by a hydrophobic separating zone and upstanding surface can be produced by applying a continuous hydrophobic layer onto a hydrophilic substrate and then pattern-wise removing the hydrophobic layer so as to give rise to microwells with a hydrophilic bottom. Such microtiter plates can also be prepared by pattern-wise applying the hydrophobic separating zone and upstanding surface on the hydrophilic substrate.

The invention thus encompasses a method for producing a microtiter plate, comprising the steps of, in order :
- providing a substrate with a homogeneous hydrophilic surface covered with a heat or light sensitive hydrophobic layer having a particular degree of solubility in a developer,
- exposing said hydrophobic layer with heat or light to pattern-wise change said solubility to more or less soluble in said developer, and
- pattern-wise removing by the developer the soluble parts of said exposed hydrophobic heat or light sensitive layer, thereby forming a pattern of multiple microwells with hydrophilic bottoms and hydrophobic upstanding surfaces separated from each other by hydrophobic separating zones.

The invention thus also encompasses a method for producing a microtiter plate, comprising the steps of :
- providing a substrate with a hydrophilic surface,
- pattern-wise applying, preferably by non-impact printing devices, hydrophobic areas on said substrate, thereby forming a pattern of multiple microwells with hydrophilic bottoms and hydrophobic upstanding surfaces separated from each other by hydrophobic separating zones.

The substrate with a hydrophilic surface used for the production of microtiter plates according to this invention can be any hydrophilic substrate. Especially the hydrophilic substrates known in the art of lithographic printing plates are useful. It can be a metal layer, e.g. copper, aluminium, iron, etc, or a metal oxide or a metal that is partly oxidized at its surface; so when a metallic hydrophilic substrate is used, anodised and grained aluminium is a preferred substrate. The hydrophilic substrate can be a silicon wafer, it can be glass, etc. Also a polymeric sheet or web material containing a metal or metal oxide surface can be used as the hydrophilic substrate, e.g. a polyimide sheet or web whereon a copper layer is present.

The substrate with the hydrophilic surface can also be a polymer sheet having a hydrophilic surface, e.g. polyesters comprising a large amount, up to 20 to 30 %, of moieties carrying sulfonic acid groups. The substrate with the hydrophilic surface can also be a polymeric or glass sheet carrying a hydrophilic layer, e.g. a hydrophilic colloid containing layer wherein the hydrophilic colloid can be gelatine, polyvinylalcohol, etc., or a hydrophilic layer containing hydrophilic alumina, silica or titania particles. In the case a hydrophilic layer containing a hydrophilic colloid is used, the layer is preferably hardened, e.g., polyvinylalcohol hardened with TMOS (tetramethylorthosilicate) or with boric acid, or gelatine hardened with formaldehyde.

As explained already earlier the hydrophilic layer can be a rather thick liquid absorbing layer, e.g. a boehmite layer. The thickness of said absorbing hydrophilic layer is preferably larger than 10 µm, even in the range of 30 to 100 µm, so that a very large amount of dispensed liquid can be captured. As well known to those skilled in the art of photographic film fabrication, the physical characteristics of said absorbing bottom layer can be made to be very anisotropic, e.g. by sol-gel drying, so that lateral diffusion under the separating surface is even more restricted. If lateral diffusion of a component is not wanted or has to be prevented, an absorbing, hydrophilic coating can be applied in each finished well separately instead of a continuous absorbing coating, each well having a non-absorbing surface.

On top of such a hydrophilic layer a continuous hydrophobic layer is applied. The hydrophobic layer can be a photosensitive or heat sensitive layer. The hydrophobic layer comprises preferably an alkali soluble polymer, or a combination of a such a polymer with a so-called insolubiliser, also called inhibitor. The solubility of this polymer, or of the polymer-inhibitor complex in a developer, i.e. in most instances the solubility in an alkaline solution, is capable of being differentiated upon exposure by heat or light, i.e. the solubility of the polymer is decreased (negative working), or the solubility of the polymer-complex is increased (positive working) by disruption of the complex. Both negative and positive working layers can be used to produce a microtiter plate according to this invention. Very useful light or heat sensitive hydrophobic layers are those that have been disclosed in connection with the production of lithographic printing plates. For sake of this invention the formulation of the layers and the thickness of the coatings thereof has to be adapted.

An overview of hydrophobic layers that are heat sensitive and that are useful in the fabrication of microtiter plates according to this invention, has been given by R. Goodman and B. Nüssel in TAGA 99 pages 264-279 in an article titled : The Technology Generations of Digital Thermal Printing Plates presented at the 99 conference of the Technical Association of Graphic Arts (TAGA) held April 1999 and published in the Proceedings of this conference. Useful heat sensitive layers can be layers containing a phenolic resin, a cross-linker, a thermal acid generator and an IR absorbing dye or pigment as disclosed in, e.g., EP-A-819 980, EP-A-819 985, EP-A-795 789, US-P-5,491,046, US-P-5,466,557, US-P-5,340,699, US-P-5,663,037, US-P-5,814,431, etc. In such layers upon heating the phenolic resin is cross-linked and thus insolubilised at the exposed areas.

Other useful thermosensitive layers for use in the production of microtiter plates according to this invention are layers containing a phenolic resin and a insolubiliser/inhibitor; this inhibitor forms hydrogen bonds with the phenolic resin and makes it insoluble in the developer. After heat exposure, the hydrogen bonds are broken in the exposed areas and the resin becomes soluble. Such layers have been disclosed in, e.g., WO-A-98/54621, WO-A-98/42507, US-A-5,858,626, EP-A-823 327, EP-A-825 927, etc. Further useful heat sensitive hydrophobic layers for use in the production of microtiter plates according to this invention are layers containing a dispersion of hydrophobic thermoplastic (heat softenable core / aqueous soluble shell) polymer particles in a hydrophilic binder which coalesce under IR laser exposure to form the insoluble image areas. Such layers have been disclosed in, e.g., EP-A-514 145, EP-A-599 510, WO-A-98/51496, EP-A-773 112, WO-A-98/53994, etc. Also heat sensitive hydrophobic layers as disclosed in EP-A-864,420 and EP-A-881,094.

Ablative layers, wherein the hydrophobic layer is imagewise ablated by IR-exposures, can be used for the production of microtiter plates according to the invention. Such layers have been disclosed in, e.g., EP-A-628,409, WO-A-98/55330, US-P-5,401,611, DE-A-19748711, US-P-5,605,780, US-P-5,691,114, WO-A-97/00735, US-P-4,054,094 , EP-A-882 582, etc..

Light sensitive hydrophobic layers for use in the production of microtiter plates can also be positive or negative working. A positive working light sensitive hydrophobic layer is usually based on the diazoquinone/novolak system, also used in photoresists for the electronics industry. Typical photoresists useful for making the hydrophobic layer are sold by SHIPLEY Company, L.L.C. Marlborough, MA, USA. The diazoquinone can be, e.g., a compound as the ones described in J. Kosar, Light-Sensitive Systems, pp. 339-352, John Wiley & Sons Inc., o-quinonediazide sulfonic acid esters or o-quinonediazide sulfonic acid amides obtained by the reaction with various kinds of aromatic polyhydroxy compounds or aromatic amino compounds ester of benzoquinone-(1,2)-diazidosulfonic acid chloride or naphthoquinone-(1,2)-diazido-5-sulfonic acid chloride and a pyrogallol-acetone resin, as disclosed, e.g., in JP-B-43-28403, and the ester of benzoquinone-(1,2)-diazidosulfonic acid chloride or naphthoquinone-(1,2)-diazido-5-sulfonic acid chloride and a phenol-formaldehyde resin, as disclosed, e.g., in U.S. Pat. Nos. 3,046,120 and 3,188,210. Further, the ester of naphthoquinone-(1,2)-diazido-4-sulfonic acid chloride and a phenol-formaldehyde resin or a cresol-formaldehyde resin, and the ester of naphthoquinone-(1,2)-diazido-4-sulfonic acid chloride and a pyrogallol-acetone resin. The resins with polyhydric groups forming the ester with the benzoquinone-(1,2)-diazidosulfonic acid or with the naphthoquinone-(1,2)-diazido sulfonic acid are preferably low molecular weight resins.

Typical useful novolak resins are, e.g., a phenol-formaldehyde resin, a m-cresol-formaldehyde resin, p-cresol-formaldehyde resin, an o-cresol-formaldehyde resin, a m-cresol/p-cresol mixture-formaldehyde resin and phenol/cresol mixture-formaldehyde resins (wherein the cresol may be m-cresol, p-cresol, o-cresol or a m-cresol/p-cresol mixture, a m-cresol/o-cresol mixture or a o-cresol/p-cresol mixture). Other phenol resins of resol type are also suitable for use in the hydrophobic layer, e.g., phenol/cresol mixture-formaldehyde resins (wherein the cresol may be m-cresol, p-cresol, o-cresol or a m-cresol/p-cresol mixture, a m-cresol/o-cresol mixture or a o-cresol/p-cresol mixture).

A negative working light sensitive hydrophobic layer preferably comprises a diazonium salt, a diazonium resin or an aryldiazosulfonate homo- or copolymer. Examples of low-molecular weight diazonium salts for use in the present invention include: benzidine tetrazoniumchloride, 3,3'-dimethylbenzidine tetrazoniumchloride, 3,3'-dimethoxybenzidine tetrazoniumchloride, 4,4'-diaminodiphenylamine tetrazoniumchloride, 3,3'-diethylbenzidine tetrazoniumsulfate, 4-aminodiphenylamine diazoniumsulfate, 4-aminodiphenylamine diazoniumchloride, 4-piperidino aniline diazoniumsulfate, 4-diethylamino aniline diazoniumsulfate and oligomeric condensation products of diazodiphenylamine and formaldehyde. Said layer preferably comprises a positive or negative working photoresist as active ingredient, i.e. a compound or composition of which the solubility can be differentiated upon exposure. Upon exposure the diazo resins or diazonium salts are converted from water soluble to water insoluble (due to the destruction of the diazonium groups) and additionally the photolysis products of the diazo may increase the level of cross-linking of the polymeric binder or diazo resin, thereby selectively converting the surface, in an image-wise pattern, from water-soluble to water-insoluble. The unexposed areas remain unchanged, i.e. water-soluble. An overview of both negative and positive working layers and ingredients contained in them have been disclosed in European patent application, appl. No. 00202216 filed on June 26, 2000.

When microtiter plates comprising multiple microwells according to this invention are produced by providing a substrate with a hydrophilic surface and pattern-wise applying a hydrophobic pattern on said substrate, then it is preferred to apply the hydrophobic pattern by non-impact printing, especially by ink-jet printing. The methods for imagewise applying solutions to a hydrophilic substrate as known from the art of lithographic printing plate preparation can be used for preparing microtiter plates of this invention. Hydrophobic solutions that can be applied by ink-jet to a hydrophilic substrate are well known and have been disclosed, e.g., in WO-A-94/11191, in JP-A-62-25081, wherein it is disclosed to apply an ink, containing titanate or silane coupling agents by ink jet printing onto a hydrophilic surface, in US-P-4,833,486 wherein it is disclosed to deposit a hot wax on a hydrophilic surface. Also in JP-A-1-13456 methods for applying, e.g., curable silicones on a hydrophilic substrate are disclosed. Also the methods disclosed in US-P-5,511,477 and US-P-5,312,654 can be used for the production of microtiter plates of this invention.

We will now explain in detail the second embodiment of the methods of this invention : the manufacturing of a microtiter plate having microwells with a hydrophobic bottom separated from each other by a hydrophilic separating zone and upstanding surface.

Such microtiter plates are well suited for reactions in organic non-aqueous solvents or in oleophilic solvents.

Microtiter plates according to this second embodiment can be made starting from a heat sensitive material having, in order, a support, a hydrophobic layer and a hydrophilic layer. Basically such material is patterned with multiple microwells as follows : upon pattern-wise exposure with heat, e.g., with a IR-emitting laser, the overlaying hydrophilic layer is ablated, thus producing microwells with a hydrophobic bottom and hydrophilic upstanding surface separated from each other by hydrophilic separating zones.

Thus the invention encompasses also a method for producing microtiter plates having microwells with a hydrophobic bottom separated by a hydrophilic separating zone and upstanding surface, comprising the steps of imagewise ablating the hydrophilic top layer to free the hydrophobic bottom of the resulting microwell.

The hydrophobic layer can be the substrate of the microtiter plate itself, e.g. a polymer as polyethylene terephthalate, polyethylene naphthalate, polyethylene, polypropylene, polystyrene, etc. or it can be a layer coated on a support. When the layer is coated on said support it contains preferably a binder and a substance capable of converting light into heat. This latter substance can be selected from the group consisting of carbon black, infrared or near infrared absorbing dyes or pigments, metals such as Bi, Sn, Te etc. or a combination thereof. The hydrophobic binder is preferably selected from the group consisting of cellulose esters, cellulose nitrate, a copolymer of vinylidene chloride and acrylonitrile, poly(meth)acrylates, polyvinyl chloride, and polycarbonates. From these polymers, a polymer containing nitrate ester groups, a polymer containing carbonate groups and a polymer containing covalently bound chlorine are preferred.

The hydrophilic layer contains hydrophilic binders having free reactive groups including e.g. hydroxyl, carboxyl, hydroxyethyl, hydroxy-propyl, amino, aminoethyl, aminopropyl, carboxymethyl, etc., along with suitable cross-linking or modifying agents including e.g. hydrophilic organotitanium reagents, aluminoformyl acetate, dimethylol urea, melamines, aldehydes, hydrolyzed tetraalkyl orthosilicate, etc.. Such polymers are selected from the group consisting of gum arabic, casein, gelatin, starch derivatives, carboxymethyl cellulose and Na salt thereof, cellulose acetate, sodium alginate, vinyl acetate-maleic acid copolymers, styrenemaleic acid copolymers, polyacrylic acids and salts thereof, polymethacrylic acids and salts thereof, hydroxy-ethylene polymers, polyethylene glycols, hydroxypropylene polymers, polyvinyl alcohols, and hydrolyzed polyvinylacetate having a hydrolyzation degree of at least 60% by weight and more preferably at least 80% by weight.

Microtiter plates according to this invention can be made double sided, i.e. the substrate may carry a microtiter plate on both sides of it. When made double sided, the microtiter plates can carry on both sides a microtiter plate prepared according to the first embodiment of the invention, or on both sides a microtiter plate prepared according to the second embodiment of the invention, or on one side a microtiter plate prepared according to the first embodiment of the invention and on the other side a microtiter plate prepared according to the second embodiment.

Microtiter plates of this invention can thus be made small; for example it is possible to accommodate four 96 well microtiter plates on one side of a sheet with DIN A4 dimensions, or, when the microtiter plates are double sided, eight 96 well microtiter plates can be accommodated on a single sheet with DIN A4 dimensions.

Microtiter plates of this invention can be coupled to a cover sheet that can be transparent, translucent, black, moisture impermeable, etc. The cover sheet can be partially fixed to the microtiter plate, it can be made self-adhesive to the microtiter plate, etc. When the microtiter plate is rectangular, then the cover sheet is preferably fixed on one side of the microtiter plate.

When using said materials having wells for combinatorial applications for high throughput screening purposes, it is advantageous to include a marking system onto the material. During the fabrication of the material having wells for combinatorial applications, it is e.g. possible to include a barcode at different locations, so that addressing of a large pile of microwell plates with an enormous amount of wells can be done quite easily and fast. The additional information can be applied to said microwell plates by impact technologies such as label stickers, thermal transfer printing, screen printing, flexo printing, gravure printing, offset printing. It can also be applied by non impact printing technologies such as ink jet printing, toner jet printing, direct laser marking, etc.. .If the plates are fabricated using etching methods the marking can be included into the etching process.

The microwell plate having wells for combinatorial applications according to the present invention can be used for a wide variety of applications. It can be used in reflection or transparency mode with hydrophilic transparent wells into which components are applied that have to be screened using spectroscopic or densitometric techniques. The microwell plate as described above can have wells of which the hydrophobic zones including the walls have a specific colour to prevent for example cross-talk between adjacent wells during spectroscopic evaluation. An anodized aluminium substrate coated with coloured or colourless hydrophobic photopolymeric well-walls can be used to dispense reaction components after which the reaction product (optionally after a higher temperature treatment) can be screened for properties such as IR-absorption, luminescent emission, e.g. phosphorescence, gloss characteristics, or any relevant characteristic that is related to the resultant finalized product.

The microwell plate as described above can be used to contain human or animal cell cultures, bacteria, viruses, genetically modified cells, etc., and their additives to the well locations that can be stored and analysed later on (e.g. after 24 hours, or after 7 days) for cell growth.

The microwell plate can be used in a process comprising the steps of dispensing a growth medium, an active biological material, an activity blocker and / or activity enhancer, an additive to visualise (quantitatively) the effect of some activity (e.g., a colour test reagent), a fixing agent to stabilize the shown activity after a certain period of time, and a screening step in which e.g. spectroscopic techniques are used to measure and store the resultant activity data in a database.

In order to prevent well contamination caused by lateral diffusion of biological material through the uniformally applied absorbing hydrophilic coating, the growth medium can also be applied separately into each well having a non-absorbing surface during the fabrication of the microwell plates.

The present invention will now be illustrated by the following examples without however being limited thereto.

### EXAMPLES

### EXAMPLES 1-4

An aluminium surface was anodized to obtain a surface roughness and top-layer thickness as indicated in table 1. On top of this anodized aluminium surface a 10 µm thick hydrophobic layer of photoresist (Shipley MICROPOSIT SP25-10) was provided, soft baked and pattern-wise exposed through a mask to light with wavelength 350 nm. After development in a commercial developer (Shipley PHOTOPOSIT 160) and hard baking microwells were formed with a diameter at the bottom of 7 mm. The microwells had thus a physical volume of 0.38 µl. The microwells were filled with water based ink jet inks (of a SHERPA 43 ink jet printer commercially available from Agfa-Gevaert, Belgium) and it showed that the microwells could hold 12.5 µl ink. The microtiter plate was filled so as to have a microwell containing 12.5 µl of water surrounded by empty microwells. The plate was placed on a vibration table and vibrated at 600 vibrations/min. No water spill nor overflow to the empty microwells was observed. If smaller amounts of liquid were used, then the spreading was not complete over the complete area of the microwell. As indicated in table 1 the aluminium surface having a treated aluminium oxide layer with sufficient roughness showed enough spreading to wet the complete bottom of the microwell in a short period of time (1 second).

**TABLE 1**

| Experiment | Al₂O₃ [g/m²] | Rₐ [µm] | Contact Angle | Spreading [mm] |
|---|---|---|---|---|
| E1 | 3.4 | 0.25 | 18.6 | 3 |
| E2 | 2.1 | 0.51 | 16.1 | 6 |
| E3 | 3.4 | 0.88 | 16.0 | 6 |
| E4 | 1.6 | 0.89 | 15.7 | 7 |

Table 1 illustrates the spreading characteristics in microwells having a bottom of treated aluminiums. The contact angle was measured at equilibrium (10 minutes) using distilled water, the spreading was determined after spotting an amount of 2 µl of demineralised water and measuring the spreading circle after 1 second.

It is clear from table 1 that a microwell having a bottom comprising a treated surface layer shows much improved spreading characteristics. In the example combining a thin Al₂O₃-layer with high roughness the 2 µl of water was spread over the complete width of the 96-well-layout microwell within a second. It is ideal to test the material in the 96-microwell layout for its homogeneous dispersion, so it can be used to do quantitative density measurements.

### EXAMPLE 5

A 24 cm wide roll of PET substrate was coated with a 20 µm thick hydrophilic coating comprising 90% of hydrophilic boehmite, 9 % of polyvinylalcohol and 1% of boric acid as cross-linker for the binder. On top of this hydrophilic coating a 20 µm thick layer of photoresist Shipley SU-8 to which 10% (w/w) of carbon black was added to give the masking layer a black color was applied, exposed pattern-wise through a mask to light with a wavelength of 350 nm, and developed, to form, after cutting, microwell plate layouts with 96 wells with a diameter at the bottom of 7 mm. Multiple sets of pigmented ink jet inks comprising 5% of pigment in water / isopropanol mixtures were dispensed into said microwells. After drying said deposited areas of pigments the spectral characteristics of each of said deposited pigmented inks were recorded by means of a fiber-optic based spectral analysis system. Both spectral analysis and color density was measured before and after a Xenon illumination. The difference of the color density before Xenon illumination and after Xenon illumination was tabulated for the 96 different ink sets. Very fast measurements of lightfastness of ink media interactions could be recorded without requiring additional preparation and printing steps to do the measurements with real ink jet inks and real printing conditions. The homogeneity of the 96 spotted colors was sufficient to do these automated spectral measurements and quantitative density measurements.

Having illustrated the invention by the previous examples, it must be clear for those skilled in the art that many adaptations to this basic concept can be formulated without departing from the scope of the current invention. Any material comprising differences in surface energy and being able to discriminate in its well positions for liquid spreading / containing compared to the non-microwell-zones may be considered.

## Claims

1. A microtiter plate for combinatorial experimentation comprising a substrate and multiple microwells, arranged on said substrate in a predetermined pattern and separated from each other by separating zones, each microwell comprising a bottom and an upstanding surface formed by the adjacent separating zones and extending at most 500 µm above the bottom, wherein the composition of said bottoms on the one hand and the composition of said separating zones and upstanding surfaces on the other hand show a different hydrophilicity, and wherein said bottoms have undergone a surface treatment to improve the dynamics of fluid spreading.

2. A microtiter plate according to claim 1 wherein said microwells have bottoms showing a surface roughness larger than 0.25 µm Rₐ, as a result of said surface treatment.

3. A microtiter plate according to claim 1 wherein said microwells have bottoms having undergone a surface layer treatment resulting in an extra layer with a thickness larger than 1 µm to improve the dynamics of fluid spreading.

4. A microtiter plate according to claim 1 wherein said microwells have a bottom, comprising the substrate and an extra top coating having a dry thickness of at least 1 µm to improve the dynamics of fluid spreading.

5. A microtiter plate according to any of the preceding claims wherein all or part of said microwells are further divided each in at least two "baby microwells" by means of at least one upstanding separating wall extending at most 300 µm above said bottom of each microwell.

6. A microtiter plate according to any of the preceding claims wherein said microwells are coupled to means for heating the content of the microwells, e.g., thermal heating or optical heating and/or to means for stirring the contents of the microwell.

7. A microtiter plate according to any of the preceding claims, wherein both sides of said substrate carry microwells, as defined in the preceding claims.

8. A method for producing a microtiter plate according to any of claims 1 to 4 and 6 to 7, comprising the steps of, in order :
- providing a substrate with a homogeneous hydrophilic surface covered with a heat or light sensitive hydrophobic layer having a particular degree of solubility, in a developer,
- exposing pattern-wise said hydrophobic layer with heat or light to pattern-wise change said solubility, to more or less soluble in said developer, and
- pattern-wise removing by said developer the soluble parts of said exposed hydrophobic heat or light sensitive layer, thereby forming a pattern of multiple microwells with hydrophilic bottoms and hydrophobic upstanding surfaces separated from each other by hydrophobic separating zones.

9. A method for producing a microtiter plate according to claim 8 wherein the solubility in the developer of the pattern-wise exposed parts is increased so that these exposed parts are removed by the developer and the non-exposed parts are retained (positive working mode).

10. A method for producing a microtiter plate according to claim 8 wherein the solubility in the developer of the pattern-wise exposed parts is decreased so that the non-exposed parts are removed by the developer and the exposed parts are retained (negative working mode).

11. A method for producing a microtiter plate according to any of claims 1 to 4 and 6 to 7, comprising the steps of, in order :
- providing a substrate with a hydrophilic surface,
- pattern-wise applying hydrophobic areas on said substrate, thereby forming a pattern of multiple microwells with hydrophilic bottoms and hydrophobic upstanding surfaces separated from each other by hydrophobic separating zones.

12. A method according to claim 11, wherein said hydrophobic areas are applied by means of non-impact printing.

13. A method for producing a microtiter plate according to any of claims 1 to 4 and 6 to 7, comprising the steps of, in order,:
- providing a substrate with a hydrophobic surface covered with a hydrophilic layer,
- pattern-wise ablating by heat parts of said hydrophilic layer, thereby forming a pattern of multiple microwells with hydrophobic bottoms and hydrophilic upstanding surfaces separated from each other by hydrophilic separating zones.
